# FASCICULE DE BREVET EUROPEEN

(11) **EP 0 567 359 B1**
(45) Date de publication et mention de la délivrance du brevet: **03.01.1996**
(21) Numéro de dépôt: 93400740.2
(22) Date de dépôt: 23.03.1993
(51) Int. Cl.: B60N 3/04

(54) **Dispositif de liaison d'un tapis d'habitacle de véhicule à l'entrée de porte**
Verbindungsvorrichtung für eine Fahrzeugraumverkleidung im Türbereich
Connecting device for the door trim of the passenger compartment of a motor vehicle

(30) Priorité: 22.04.1992 FR 9205192
(43) Date de publication de la demande: 27.10.1993
(73) Titulaire: AUTOMOBILES PEUGEOT, F-75116 Paris (FR); AUTOMOBILES CITROEN, F-92200 Neuilly-sur-Seine (FR)
(72) Inventeur: Bondu, Jacques, F-91430 Igny (FR)
(74) Mandataire: Robert, Jean-François

(56) Documents cités:
- EP-A- 0 313 445
- DE-A- 3 712 882

## Description

Le tapis d'habitacle d'un véhicule automobile recouvre la partie supérieure de l'entrée de porte du véhicule, pour des raisons d'esthétique. Jusqu'à présent, la zone de recouvrement et de fixation du tapis est elle-même recouverte par un élément en matière plastique propre à résister aux agressions des pieds, lors de la montée et de la descente des occupants du véhicule.

La présente invention a pour objet un dispositif pour assurer la liaison permanente du tapis d'habitacle à l'entrée de porte, qui est simple, peu coûteux et avec lequel cette liaison peut être assurée facilement.

Le dispositif objet de l'invention comporte, de manière connue, des moyens de fixation du tapis sur l'entrée de porte et un élément de finition recouvrant le bord du tapis, lesdits moyens de fixation comprenant un élément de maintien sur lequel le tapis est fixé directement et des moyens de fixation de cet élément sur l'entrée de porte. Le document EP-A-0 313 445 décrit un dispositif de ce type.

Selon l'invention, ledit élément de maintien est un profilé dont la fixation sur l'entrée de porte est assurée par le joint d'étanchéité d'entrée de porte.

Dans un premier mode de réalisation, l'élément de finition est indépendant de cet élément de maintien; mais, dans un autre mode de réalisation, l'élément de finition fait partie intégrante de cet élément de maintien.

Différentes variantes de réalisation de l'invention sont précisées dans les revendications 2 à 12 dépendantes.

On a décrit ci-après, à titre d'exemple non limitatif, deux modes de réalisation du dispositif de liaison selon l'invention, avec référence au dessin annexé dans lequel :
La Figure 1 est une vue en coupe verticale montrant un tapis fixé à une entrée de porte de véhicule, dans un premier mode de réalisation;
La Figure 2 est une vue semblable à la Figure 1, dans un second mode de réalisation.

Au dessin, on voit un plancher 1 de véhicule dont le bord d'extrémité est relevé et soudé au bord relevé d'une paroi latérale 2 du véhicule en formant une feuillure 3 d'entrée de porte. Le plancher 1 est recouvert d'un tapis 4.

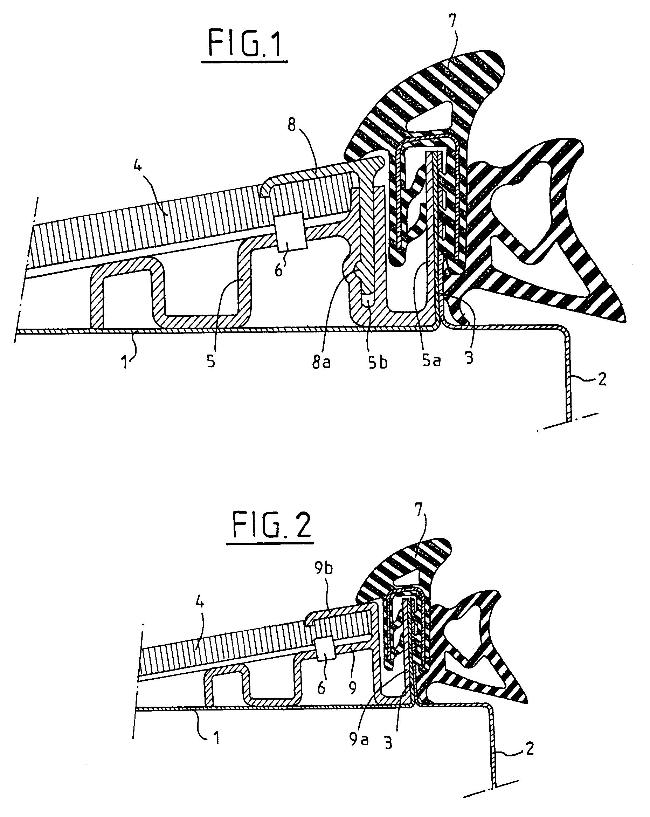

Dans le mode de réalisation de la Figure 1, le tapis 4 est fixé à l'entrée de porte du véhicule par un profilé en matière plastique 5. Ce profilé est fixé au tapis 4 en 6 par exemple par couture ou agrafage; il possède une aile 5a qui est au contact de la feuillure 3, cette dernière et l'aile 5a étant pincées dans une partie en forme d'épingle d'un joint d'étanchéité 7. Le bord du tapis 4 repose sur le profilé 5 et ce dernier est conformé de façon que le tapis descende en pente douce vers l'intérieur du véhicule.

La finition est assurée par un deuxième profilé 8 qui a une section sensiblement en L. L'une de ses ailes recouvre le bord du tapis 4 en ayant des dimensions suffisantes pour recouvrir la zone de fixation de ce tapis sur le profilé 5 alors que son autre aile est fixée par clippage à ce profilé 5. A cet effet, ce profilé comporte une ouverture longitudinale 5b dans laquelle l'aile du profilé 8 peut s'engager et qui comporte un creux recevant un bossage 8a du profilé 8.

Dans le mode de réalisation de la Figure 2, le profilé de maintien 5 et le profilé de finition 8 sont remplacés par un profilé unique 9. Ce profilé, qui est fixé en 6 au tapis, comporte une aile 9a qui est au contact de la feuillure 3 et maintenue appliquée contre celle-ci par le joint d'étanchéité 7, et une aile 9b qui recouvre la zone d'assemblage du profilé au tapis et sur laquelle vient s'appliquer le joint d'étanchéité 7. Ce profilé 9 est réalisé en un matériau suffisamment souple pour que l'aile 9b puisse être soulevée pour permettre le passage des machines servant à la fixation du tapis sur le profilé.

## Revendications

1. Dispositif pour assurer la liaison permanente d'un tapis (4) d'habitacle de véhicule à l'entrée de porte de ce véhicule, comprenant des moyens de fixation du tapis sur l'entrée de porte et un élément de finition recouvrant le bord du tapis (4), lesdits moyens de fixation comprenant un élément de maintien (5 ou 9) sur lequel le tapis (4) est fixé directement et des moyens de fixation de cet élément sur l'entrée de porte,
caractérisé en ce que ledit élément de maintien (5 ou 9) est un profilé dont la fixation sur l'entrée de porte est assurée par le joint d'étanchéité (7) d'entrée de porte.

2. Dispositif de liaison selon la revendication 1, dans le cas où l'entrée de porte présente une feuillure (3) sur laquelle une partie formant épingle du joint d'étanchéité (7) est fixée par pincement,
caractérisé en ce que l'élément de maintien (5) présente une aile (5a) au contact de la feuillure et pincée avec celle-ci par le joint (7).

3. Dispositif de liaison selon l'une des revendications précédentes,
caractérisé en ce que la fixation de l'élément de maintien (5 ou 9) sur le tapis est assurée par agrafage ou par couture.

4. Dispositif de liaison selon l'une des revendications précédentes,
caractérisé en ce que l'élément de finition (8 ou 9) est constitué par un profilé dont une aile recouvre le tapis (4).

5. Dispositif de liaison selon la revendication 4,
caractérisé en ce que ladite aile est de dimensions suffisantes pour recouvrir la zone de fixation du tapis sur le profilé de maintien (5 ou 9).

6. Dispositif selon l'une quelconque des revendications précédentes,
caractérisé en ce que l'élément profilé de maintien (5 ou 9) a une forme telle que le tapis (4) descende en pente douce vers l'intérieur du véhicule.

7. Dispositif selon l'une quelconque des revendications précédentes,
caractérisé en ce que l'élément de finition (8) est indépendant de l'élément de maintien (5).

8. Dispositif de liaison selon la revendication 7,
caractérisé en ce qu'il comporte des moyens pour fixer l'élément de finition (8) sur l'élément de maintien (5).

9. Dispositif de liaison selon la revendication 8,
caractérisé en ce que l'élément de finition (8) comporte une aile fixée par clippage dans une ouverture longitudinale (5b) du profilé (5).

10. Dispositif de liaison selon l'une des revendications 1 à 6, caractérisé en ce que l'élément de finition fait partie intégrante de l'élément de maintien.

11. Dispositif de liaison selon la revendication 10,
caractérisé en ce que l'élément de maintien (9) comporte une aile (9b) recouvrant la zone de fixation du tapis sur ce profilé.

12. Dispositif de liaison selon la revendication 11,
caractérisé en ce que l'élément de maintien (9) est en un matériau suffisamment souple pour que l'aile (9b) puisse être soulevée pour permettre le passage des machines servant à la fixation du tapis (4) sur le profité (9).

## Claims

1. A device for permanently connecting a carpet (4) in the passenger compartment of a vehicle to the door opening of that vehicle, comprising means for fastening the carpet to the door opening and a finishing element covering the edge of the carpet (4), said fastening means comprising a holding element (5 or 9) to which the carpet (4) is directly fastened and means for fastening this element to the door opening, characterised in that said holding element (5 or 9) is a profile, which is fastened to the door opening by the seal (7) of the door opening.

2. A connection device according to Claim 1, in the case where the door opening has a rabbet (3) to which a pin-shaped portion of the seal (7) is fastened by pinching, characterised in that the holding element (5) has a wing (5a) in contact with the rabbet and pinched together with said rabbet by the seal (7).

3. A connection device according to one of the preceding claims, characterised in that the holding element (5 or 9) is fastened to the carpet by stapling or stitching.

4. A connection device according to one of the preceding claims, characterised in that the finishing element (8 or 9) is constituted by a profile, one wing of which covers the carpet (4).

5. A connection device according to Claim 4, characterised in that said wing is of dimensions sufficient to cover the zone where the carpet is fastened to the holding profile (5 or 9).

6. A device according to any one of the preceding claims, characterised in that the holding profile element (5 or 9) is shaped such that the carpet (4) goes down a gentle gradient towards the interior of the vehicle.

7. A device according to any one of the preceding claims, characterised in that the finishing element (8) is independent of the holding element (5).

8. A connection device according to Claim 7, characterised in that it comprises means for fastening the finishing element (8) to the holding element (5).

9. A connection device according to Claim 8, characterised in that the finishing element (8) comprises a wing fastened by clipping into a longitudinal opening (5b) of the profile (5).

10. A connection device according to one of Claims 1 to 6, characterised in that the finishing element forms an integral part of the holding element.

11. A connection device according to Claim 10, characterised in that the holding element (9) comprises a wing (9b) covering the zone where the carpet is fastened to that profile.

12. A connection device according to Claim 11, characterised in that the holding element (9) is made of a material sufficiently flexible for the wing (9b) to be raised so as to permit the passage of the machines used for fastening the carpet (4) to the profile (9).

## Patentansprüche

1. Vorrichtung zum Sicherstellen der ständigen Verbindung einer Fahrzeugraumverkleidung (4) am Türeingang dieses Fahrzeugs, mit Befestigungseinrichtungen der Verkleidung am Türeingang und einem Verkleidungselement, das den Rand der Fahrzeugsverkleidung (4) bedeckt, wobei die Befestigungseinrichtungen ein Halteelement (5 oder 9) aufweisen, auf dem die Verkleidung (4) direkt fixiert ist, und Befestigungseinrichtungen dieses Elements am Türeingang aufweisen,
dadurch gekennzeichnet, daß das Halteelement (5 oder 9) ein Profil ist, dessen Befestigung am Türeingang durch die Dichtung (7) des Türeingangs sichergestellt wird.

2. Verbindungsvorrichtung nach Anspruch 1, in dem Fall, wo der Türeingang einen Falz (3) aufweist, auf dem ein eine Nadel bildender Bereich der Dichtung (7) durch Klemmen befestigt ist,
dadurch gekennzeichnet, daß das Halteelement (5) einen Flügel (5a) in Kontakt mit dem Falz und verklemmt mit diesem durch die Dichtung (7) aufweist.

3. Verbindungsvorrichtung nach einem der vorhergehenden Ansprüche,
dadurch gekennzeichnet, daß die Befestigung des Halteelements (5 oder 9) auf der Verkleidung durch Klemmzwicken oder durch Nähen sichergestellt ist.

4. Verbindungsvorrichtung nach einem der vorhergehenden Ansprüche,
dadurch gekennzeichnet, daß das Verkleidungselement (8 oder 9) aus einem Profil gebildet ist, von dem ein Flügel die Verkleidung (4) bedeckt.

5. Verbindungsvorrichtung nach Anspruch 4,
dadurch gekennzeichnet, daß der genannte Flügel von ausreichender Größe ist, um die Befestigungszone der Verkleidung an dem Halteprofil (5 oder 9) zu bedecken.

6. Vorrichtung nach einem der vorhergehenden Ansprüche,
dadurch gekennzeichnet, daß das profilierte Halteelement (5 oder 9) eine Form aufweist, derart, daß die Verkleidung (4) in leichter Neigung zu dem Inneren des Fahrzeugs sich absenkt.

7. Vorrichtung nach einem der vorhergehenden Ansprüche,
dadurch gekennzeichnet, daß das Verkleidungselement (8) unabhängig ist vom Halteelement (5).

8. Verbindungsvorrichtung nach Anspruch 7,
dadurch gekennzeichnet, daß es Einrichtungen zum Befestigen des Verkleidungselements (8) auf dem Halteelement (5) aufweist.

9. Verbindungsvorrichtung nach Anspruch 8,
dadurch gekennzeichnet, daß das Verkleidungselement (8) einen Flügel aufweist, der durch Klicken in eine Längsöffnung (5b) des Profils (5) befestigt wird.

10. Verbindungsvorrichtung nach einem der Ansprüche 1 bis 6,
dadurch gekennzeichnet, daß das Verkleidungselement integrierter Bestandteil des Halteelements ist.

11. Verbindungsvorrichtung nach Anspruch 10,
dadurch gekennzeichnet, daß das Halteelement (9) einen Flügel (9b) aufweist, der die Befestigungszone der Verkleidung über dieses Profil bedeckt.

12. Verbindungsvorrichtung nach Anspruch 11,
dadurch gekennzeichnet, daß das Halteelement (9) aus einem ausreichend biegsamen Material gebildet ist, damit der Flügel (9b) angehoben werden kann, um die Durchführung von Maschinen zu ermöglichen, die zur Befestigung der Verkleidung (4) an dem Profil (9) dienen.
